# EUROPEAN PATENT SPECIFICATION

(11) **EP 0 970 873 B1**
(45) Date of publication and mention of the grant of the patent: **04.06.2003**
(21) Application number: 99113133.5
(22) Date of filing: 07.07.1999
(51) Int. Cl.: B62D 5/04, B60R 21/00

(54) **A device for coupling an electric servomotor to the steering column assembly of a car**
Vorrichtung zum Ankuppeln eines elektrischen Servomotors an die Lenksäule eines Autos
Dispositif pour accoupler un servomoteur électrique sur la colonne de direction d'un véhicule

(30) Priority: 08.07.1998 IT TO980598
(43) Date of publication of application: 12.01.2000
(73) Proprietor: FIAT AUTO S.p.A., 10135 Torino (IT)
(72) Inventor: Fossat, Flavio, 10045 Piossasco (Torino) (IT)
(74) Representative: Quinterno, Giuseppe

(56) References cited:
- EP-A- 0 581 432
- DE-A- 19 742 411
- US-A- 5 021 721

## Description

The present invention relates to a device for coupling an electric servomotor to the steering column assembly of a car.

More specifically, the invention relates to a device for coupling an electric servomotor of the type defined in the preamble of the appended Claim 1, and known for exemple from US 502 1721 A, in which the motor includes a support casing connected to the steering column assembly in such a way that, in use, the motor projects from the side of the column, in a region facing a leg of the driver of the car, in a direction substantially parallel to a longitudinal axis of the car.

With the electric servomotor arranged in this way, dictated by the lay-out requirement of the car, there is a danger that if the car were to be in a substantially frontal collision with an obstacle, the servomotor would impact against the leg of the driver, with easily imaginable consequences for the driver.

The object of the present invention is to provide a device for coupling an electric servomotor to the steering column assembly of a car as described above, which eliminates the aforesaid disadvantage.

This object and others are achieved according to the invention by providing a coupling device, the main characteristics of which are defined in the appended Claim 1.

Should a car fitted with the coupling device of the invention be in substantially frontal collision with an obstacle, and should the servomotor associated with the steering column impact against the leg of the driver, or perhaps against another obstacle, its connection to the steering column assembly is released, thereby eliminating, or at least dramatically reducing, the damage that such an impact would be likely to cause.

Further characteristics and advantages of the invention will become apparent from the detailed description which follows, provided purely by way of non-limitative example, with reference to the appended drawings, in which:
Figure 1 is a side view of part of the passenger compartment of a car, in which an electric servomotor is shown coupled to a steering column assembly by a device according to the invention;
Figure 2 is a plan view from above of the portion of the passenger compartment shown in Figure 1;
Figure 3 shows a servomotor with a flange for coupling it to a steering column assembly according to the invention;
Figure 4 shows the servomotor of Figure 3, in position coupled to a steering column assembly;
Figure 5 is a partially sectioned view showing the rotatable coupling of the motor to the steering column by means of a flexible drive transmission device;
Figure 6 shows the said drive transmission device in a deformed, flexed, condition;
Figures 7 and 8 are sectioned views, taken on the lines VII-VII and VIII-VIII respectively of Figure 4; and
Figure 9 is a sectioned view similar to that of Figure 8 but showing the attachment flange of the electric servomotor decoupled from the steering column.

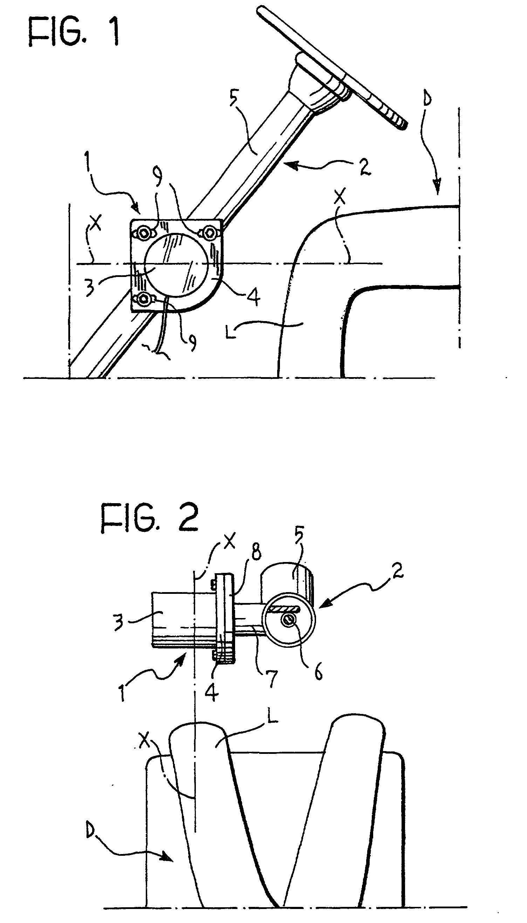

In Figures 1 1 and 2, an electric servomotor, indicated 1, is coupled to the steering column assembly 2 of a car.

The servomotor includes a support casing 3, with the end thereof facing the steering column assembly 2 having an attachment flange 4.

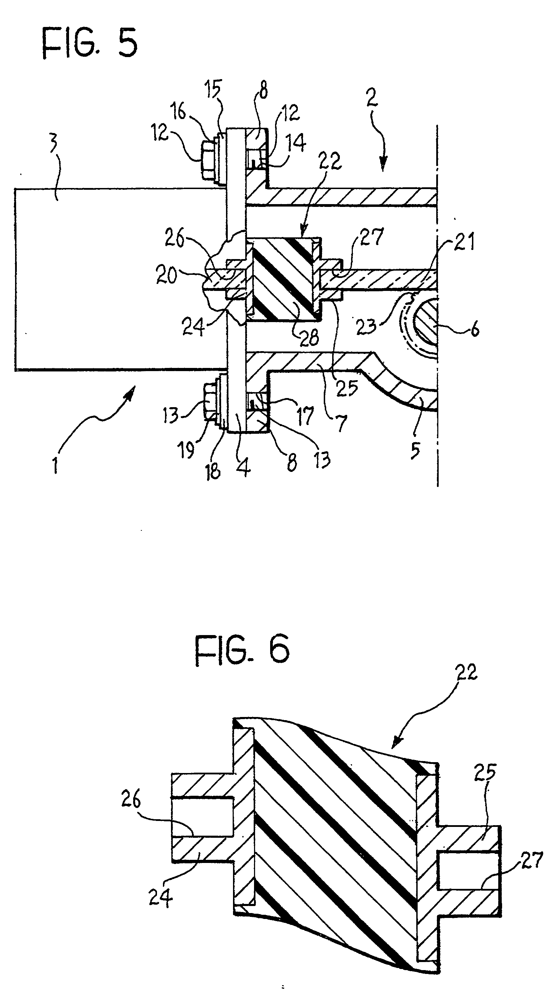

The steering column assembly 2 comprises a stationary tube 5, with the steering column 6 mounted for rotation therein (Figures 2 and 5).

The tube 5 has a lateral tubular appendage 7, ending in a flange 8 to which the attachment flange 4 of the servomotor 1 is fixed.

As can be seen in Figures 1 and 2, when mounted for use, the servomotor 1 projects from the side of the steering column assembly 2, in a region facing a leg L of the driver D of the car, along a line X-X (Figure 2) substantially parallel to a longitudinal axis of the car.

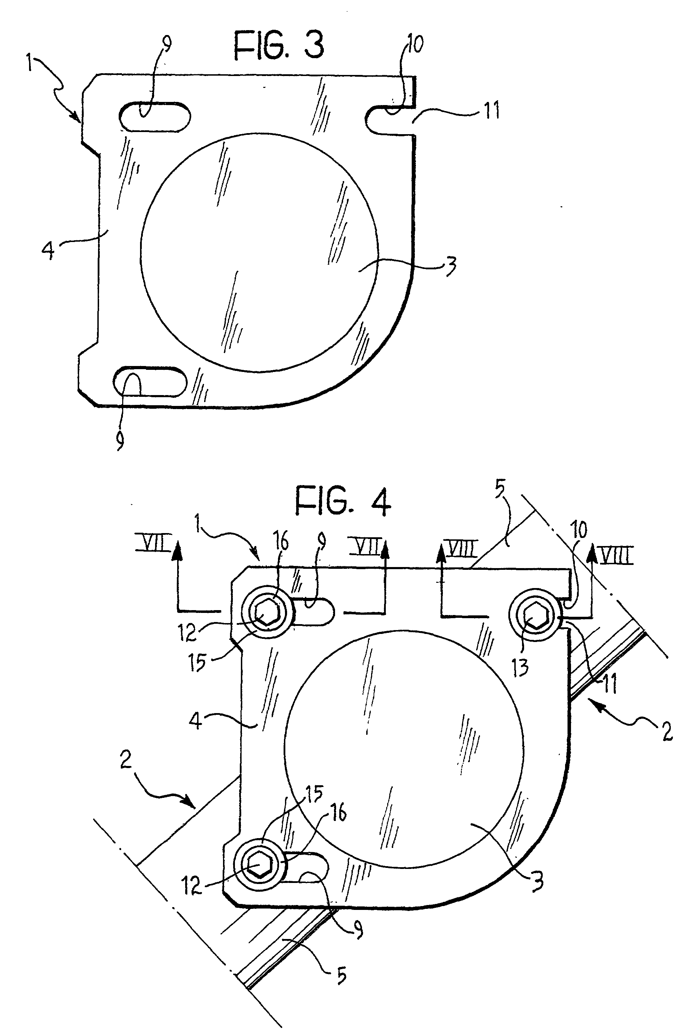

With reference to Figures 1, 3 and 4, the portion or end of the attachment flange 4 of the servomotor 1 furthest from the driving position has two elongate apertures 9, extending parallel to the axis X-X. The end of the flange 4 nearest the driving position has an additional aperture 10 (Figure 3), the outline of which has an interruption 11 facing the driver, in the portion thereof facing the driving position.

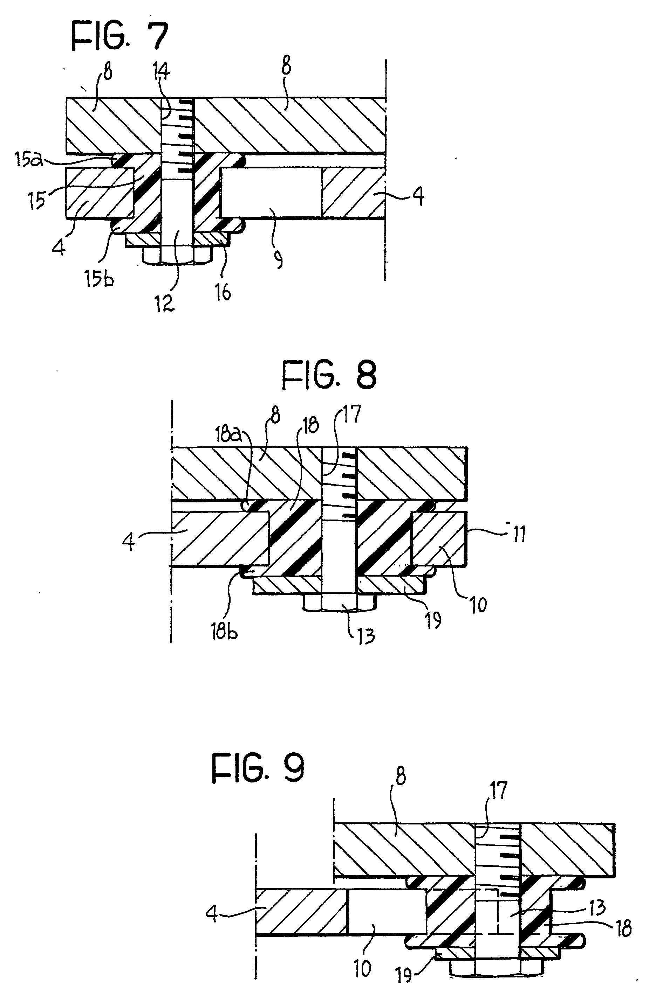

As shown in Figures 4, 7 and 8, the flange 4 of the servomotor is fixed to the flange 8 of the steering column assembly by means of screws or bolts 12 and 13. In particular, a bolt 12 extends through each aperture or slot 9 in the flange 4 and is screwed into a corresponding threaded hole 14 in the flange 8 (Figure 7). A bush 15 of elastomeric material is arranged around each bolt 12, so as to form two integral terminal flanges 15a and 15b, the first of which is "pinched" between the flanges 4 and 8 and the second of which bears against the surface of the flange 4 opposite the flange 8 (Figure 7).

A washer 16 is interposed between the head of each bolt 12 and the flange 15b of the associated bush.

During assembly, each bolt 12, with its associated bush 15 and washer 16, is positioned at the end of the corresponding slot 9 of the flange 4 furthest from the driving position (Figures 4 and 7).

With reference to Figures 4 and 8, the bolt 13, which extends through the aperture 10 in the flange 4, is screwed into a corresponding threaded hole 17, formed in the flange 8 of the steering column assembly. For convenience, a resilient bush 18, like the bushes 15 described above, also has a terminal flange 18a which is "pinched" between the flanges 4 and 8, and a second flange 18b which is gripped between the flange 4 and a washer 19 arranged beneath the head of the bolt 13.

The diameter of the stem or shaft of the bolt 13 is smaller than the width of the interruption 11 of the corresponding aperture 10 in the attachment flanges 4 of the servomotor 1.

With reference to Figure 5, the servomotor 1 has a drive shaft 20 coupled for rotation with a worm screw 21 by means of a transmission device or joint 22. Inside the tubular appendage 7 of the steering column, the worm screw 21 meshes with a pinion 23 with helical teeth, fixed to the steering column 6.

The transmission device 22 is flexible, in the sense that it is able to allow the shaft 20 of the motor to become misaligned or offset from the worm screw 21 along the axis X-X defined earlier.

In the embodiment illustrated by way of example, the transmission device 22 includes two rigid end flanges 24 and 25 in which respective, normally aligned, seats 26 and 27 are formed for coupling with the shaft 20 of the servomotor and with the worm screw 21, respectively. The coupling between the seats in the transmission device 22 and the said shafts can be either prismatic or achieved by an interference fit.

The flanges 24 and 25 of the transmission device 22 can be made of steel, for example and are interconnected by means of an intermediate element 28 of resilient material such as rubber.

The flanges 24 and 25 can be formed integrally with the intermediate element 28 by moulding this latter onto them.

Should the vehicle be in collision with an obstacle, such that an impact between the electric servomotor 1 and the leg L of the driver D, might happen, if the force applied to the servomotor in the direction of the line X-X is higher than a predetermined value, the attachment flange 4 of the servomotor is able to slide, substantially parallel to the said line X-X, in the direction of movement of the vehicle, thanks to the slot shape of the apertures 9 in the said flange. The apertures 9 are sufficiently long to enable the servomotor 1 to slide enough relative to the steering column assembly 2 to enable the bolt 13 and associated resilient bush 18 to disengage from the corresponding aperture 10 in the flange 4 of the servomotor through the interruption 11 in the said aperture, as shown in Figure 9. As a result of this disengagement, the servomotor is no longer secured to the steering column assembly 2 and is able to rotate about an essentially vertical axis perpendicular to the bolts 12, in such a way that the ends of the flanges 4 and 8 facing the driver become separated and open out.

The release of the electric servomotor 1 from its fixed position on the steering column assembly 2 makes it possible to limit any injury caused to the driver D as a result of impact with the servomotor.

The principle of the invention remaining unchanged, the embodiments and manufacturing details of the invention may of course vary widely from those described and illustrated here, purely by way of non-limitative example, without departing thereby from the scope of the invention, as defined in the appended claims.

## Claims

1. A device for coupling an electric servomotor (1) to a steering column assembly (2) of a car, the servomotor (1) having a support casing (3) connected to the steering column assembly (2) in such a way that, in use, the said servomotor (1) projects from the side of the steering column assembly (2) in a region facing a leg (L) of the driver (D) of the car, along a line (X-X) substantially parallel to a longitudinal axis of the car; the coupling device including an attachment flange (4) on the casing (3) of the servomotor (1), and means (9-19) for fixing the said flange (4) to the steering column assembly (2); the device being **characterised in that** the said fixing means (9-19) are arranged to enable the servomotor (1) to be released from the steering column assembly (2) when the said servomotor (1) is subjected to a reaction force substantially parallel to the said line (X-X), in the direction of movement of the car, of a magnitude greater than a predetermined value.

2. A device according to Claim 1, **characterised in that** the said attachment flange (4) has
- at a least one first elongate aperture (9) which in the mounted condition of the servomotor (1) extends essentially parallel to the said line (X-X), and
- at least one second aperture (10) the outline of which has an interruption (11) which in the said mounted condition faces the driving position;
the fixing means (9-19) comprising
- at least a first and a second screw or bolt (12, 13), fixed to the steering column assembly (2), which extend through the said first (9) and the said second aperture (10) respectively in the flange (4);
- the first screw or bolt (12) being clamped in the end of the said first aperture (9) furthest from the driving position;
- the second screw or bolt (13) having a cross section or diameter smaller than the width of the said interruption (11) in the said second aperture (10);
- the first aperture (9) being long enough to enable the flange (4) to slide a sufficient distance relative to the said first screw or bolt (12) in the direction of the said line (X-X) to enable the second screw or bolt (13) to disengage from the second aperture (10) in the flange (4) through the interruption (11) therein, when the servomotor (1) is subjected to a said reaction force greater than a predetermined value.

3. A device according to Claim 2, **characterised in that** respective bushes (15, 18) of resilient material are arranged around the associated fixing screws or bolts (12, 13) in the said apertures (9, 10) in the attachment flange (4) of the servomotor (1).

4. A device according to Claim 2 or Claim 3, in which the servomotor (1) is coupled by a worm screw (21) to a pinion (23) fixed for rotation with the steering column (6); the device being **characterised in that** the shaft (20) of the servomotor (1) is coupled for rotation with the worm screw (21) by means of a flexible transmission device.

5. A device according to Claim 4, **characterised in that** the said transmission device (22) includes two rigid end flanges (24, 25) interconnected by an intermediate element (28) of resilient material and torsionally coupled one to the shaft (20) of the servomotor (1) and the other to the said worm screw (21).

6. A device according to Claim 5, **characterised in that** the intermediate element (28) of the transmission device (22) is made of elastomeric material.

7. A device according to Claim 5 or Claim 6, **characterised in that** the end flanges (24, 25) of the transmission device (22) are made of a metal material.

## Patentansprüche

1. Vorrichtung zum Ankoppeln eines elektrischen Servomotors (1) an einer Lenksäule (2) eines Automobils, wobei der Servomotor (1) ein Tragegehäuse (3) besitzt, das mit der Lenksäule (2) solcherart verbunden ist, dass der Servomotor (1) bei Verwendung in einem Bereich, der einem Bein (L) des Fahrers (D) des Automobils gegenüberliegt, entlang einer im Wesentlichen zu einer Längsachse des Automobils parallelen Linie (X-X) aus der Seite der Lenksäule (2) ragt, die Ankoppelungsvorrichtung einen Befestigungsflansch (4) am Gehäuse (3) des Servomotors (1) und Mittel (9-19) zum Befestigen des Flansches (4) an der Lenksäule (2) umfasst; und wobei die Vorrichtung **dadurch gekennzeichnet ist, dass** die Befestigungsmittel (9-19) solcherart angeordnet sind, um ein Lösen des Servomotors (1) von der Lenksäule (2) zu ermöglichen, wenn der Servomotor (1) einer im Wesentlichen zur Linie (X-X) parallelen Reaktionskraft von einer Größenordnung, die einen vorbestimmten Wert überschreitet, in Richtung der Bewegung des Automobils ausgesetzt wird.

2. Vorrichtung gemäß Anspruch 1, **dadurch gekennzeichnet, dass** der Befestigungsflansch (4) Folgendes aufweist:
- zumindest eine erste längliche Öffnung (9), die sich im montierten Zustand des Servomotors (1) im Wesentlichen parallel zur Linie (X-X) erstreckt, und
- zumindest eine zweite Öffnung (10), deren Umriss eine Unterbrechung (11) besitzt, welche in diesem montierten Zustand der Fahrtstellung gegenüberliegt;
wobei die Befestigungsmittel (9-19) Folgendes umfassen:
- zumindest eine erste und eine zweite Schraube oder einen ersten und einen zweiten Bolzen (12, 13), die an der Lenksäule (2) befestigt sind and sich durch die erste (9) bzw. zweite Öffaung (10) im Flansch (4) erstrecken;
- wobei die erste Schraube oder der erste Bolzen (12) im Ende der ersten Öffnung (9), die am weitesten von der Fahrtstellung entfernt ist, festgeklemmt ist;
- die zweite Schraube oder der zweite Bolzen (13) einen Querschnitt oder Durchmesser besitzt, der kleiner ist als die Breite der Unterbrechung (11) in der zweiten Öffnung (10);
- die erste Öffnung (9) lang genug ist, um zu ermöglichen, dass sich der Flansch (4) über eine ausreichende Distanz im Verhältnis zur ersten Schraube oder zum ersten Bolzen (12) in Richtung der Linie (X-X) verschiebt, um zu ermöglichen, dass sich die zweite Schraube oder der zweite Bolzen (13) aus der zweiten Öffnung (10) im Flansch (4) durch die darin ausgeführte Unterbrechung (11) löst, wenn der Servomotor (1) einer einen vorbestimmten Wert überschreitenden Reaktionskraft ausgesetzt wird.

3. Vorrichtung gemäß Anspruch 2, **dadurch gekennzeichnet, dass** entsprechende Hülsen (15, 18) aus elastischem Material um die zugehörigen Befestigungsschrauben oder -bolzen (12, 13) in den Öffnungen (9, 10) im Befestigungsflansch (4) des Servomotors (1) angeordnet sind.

4. Vorrichtung gemäß Anspruch 2 oder Anspruch 3, wobei der Servomotor (1) durch eine Gewindespindel (21) an einem zur Drehung mit der Lenksäule (6) befestigten Ritzel (23) angekoppelt ist; wobei die Vorrichtung **dadurch gekennzeichnet ist, dass** der Schaft (20) des Servomotors (1) durch eine flexible Übertragungsvorrichtung zur Drehung mit der Gewindespindel (21) gekoppelt ist.

5. Vorrichtung gemäß Anspruch 4, **dadurch gekennzeichnet, dass** die Übertragungsvorrichtung (22) zwei starre Schlussflansche (24, 25) umfasst, die durch ein Zwischenelement (28) aus elastischem Material miteinander verbunden sind und von denen einer torsional am Schaft (20) des Servomotors (1) und der andere an der Gewindespindel (21) angekoppelt ist.

6. Vorrichtung gemäß Anspruch 5, **dadurch gekennzeichnet, dass** das Zwischenelement (28) der Übertragungsvorrichtung (22) aus einem Elastomermaterial gefertigt ist.

7. Vorrichtung gemäß Anspruch 5 oder Anspruch 6, **dadurch gekennzeichnet, dass** die Schlussflansche (24, 25) der Übertragungsvorrichtung (22) aus einem Metallmaterial gefertigt sind.

## Revendications

1. Dispositif pour l'accouplement d'un servomoteur électrique (1) à un ensemble de colonne de direction (2) d'une automobile, le servomoteur (1) ayant un boîtier de support (3) relié à l'ensemble de colonne de direction (2) d'une manière telle que, lors de l'utilisation, ledit servomoteur (1) dépasse du côté de l'ensemble de colonne de direction (2) dans une zone face à une jambe (L) du conducteur (D) de l'automobile, le long d'une ligne (X-X) sensiblement parallèle à un axe longitudinal de l'automobile; le dispositif d'accouplement comprenant une bride de fixation (4) sur le boîtier (3) du servomoteur (1), et des moyens (9 à 19) destinés à fixer ladite bride (4) sur l'ensemble de colonne de direction (2); le dispositif étant **caractérisé en ce que** lesdits moyens de fixation (9 à 19) sont prévus pour permettre au servomoteur (1) d'être libéré de l'ensemble de colonne de direction (2) lorsque ledit servomoteur (1) est soumis à une force de réaction sensiblement parallèle à ladite ligne (X-X), dans la direction de déplacement de l'automobile, d'une amplitude supérieure à une valeur prédéterminée.

2. Dispositif selon la revendication 1, **caractérisé en ce que** ladite bride de fixation (4) possède
- au moins une première ouverture allongée (9) qui, dans la condition montée du servomoteur (1), s'étend sensiblement parallèlement à ladite ligne (X-X), et
- au moins une deuxième ouverture (10) dont le contour a une interruption (11) qui, dans ladite condition montée, fait face à la position de conduite;
les moyens de fixation (9 à 19) comportant
- au moins un premier et un deuxième boulon ou vis (12, 13), fixés sur l'ensemble de colonne de direction (2), qui s'étendent à travers ladite première (9) et ladite deuxième ouverture (10) respectivement dans la bride (4);
- le premier boulon ou vis (12) étant serré dans l'extrémité de ladite première ouverture (9) plus éloignée de la position de conduite;
- le deuxième boulon ou vis (13) ayant une section ou un diamètre plus petit que la largeur de ladite interruption (11) dans ladite deuxième ouverture (10);
- la première ouverture (9) étant suffisamment longue pour permettre à la bride (4) de coulisser sur une distance suffisante par rapport au dit premier boulon ou vis (12) dans la direction de ladite ligne (X-X) de façon à permettre au deuxième boulon ou vis (13) de se désengager de la deuxième ouverture (10) dans la bride (4) grâce à l'interruption (11), lorsque le servomoteur (1) est soumis à ladite force de réaction supérieure à une valeur prédéterminée.

3. Dispositif selon la revendication 2, **caractérisé en ce que** des douilles respectives (15, 18) en matière élastique sont disposées autour des boulons ou vis de fixation (12, 13) associés dans lesdites ouvertures (9, 10) dans la bride de fixation (4) du servomoteur (1).

4. Dispositif selon la revendication 2 ou 3, dans lequel le servomoteur (1) est relié par une vis sans fin (21) à un pignon (23) fixé pour rotation avec la colonne de direction (6); le dispositif étant **caractérisé en ce que** l'arbre (20) du servomoteur (1) est relié pour rotation à la vis sans fin (21) au moyen d'un dispositif de transmission flexible.

5. Dispositif selon la revendication 4, **caractérisé en ce que** ledit dispositif de transmission (22) comprend deux brides d'extrémité rigides (24, 25) interconnectées par un élément intermédiaire (28) en matière élastique et reliées en torsion l'une, à l'arbre (20) du servomoteur (1) et l'autre à ladite vis sans fin (21).

6. Dispositif selon la revendication 5, **caractérisé en ce que** l'élément intermédiaire (28) du dispositif de transmission (22) est fabriqué en matière élastomère.

7. Dispositif selon la revendication 5 ou la revendication 6, **caractérisé en ce que** les brides d'extrémité (24, 25) du dispositif de transmission (22) sont fabriquées dans une matière métallique.
